# FASCICULE DE BREVET EUROPEEN

(11) **EP 0 431 683 B1**
(45) Date de publication et mention de la délivrance du brevet: **06.09.1995**
(21) Numéro de dépôt: 90203156.6
(22) Date de dépôt: 30.11.1990
(51) Int. Cl.: G06F 13/42

(54) **Dispositif d'horloge pour bus série**
Takterzeuger für seriellen Bus
Serial bus clock device

(30) Priorité: 05.12.1989 FR 8916041
(43) Date de publication de la demande: 12.06.1991
(73) Titulaire: PHILIPS ELECTRONIQUE GRAND PUBLIC, 92150 Suresnes (FR); Philips Electronics N.V., 5621 BA Eindhoven (NL)
(72) Inventeur: Bendahan, Samuel, Société Civile S.P.I.D., F-75008 Paris (FR)
(74) Mandataire: Caron, Jean

(56) Documents cités:
- EP-A- 0 262 429
- US-A- 4 570 215

## Description

La présente invention concerne un dispositif destiné à fournir une horloge pour un bus externe d'un type série qui comprend au moins un fil d'horloge et un fil de données, dans un système à microprocesseur muni d'une unité centrale avec un agencement de bus interne d'adresses et de données connecté à l'unité centrale et à une mémoire de codes opératoires.

L'invention s'applique notamment dans les systèmes à microprocesseur utilisés dans des automates, pour la commande d'appareils électriques professionnels ou domestiques, comme par exemple des systèmes audio-video.

Dans l'art antérieur (voir par exemple US-A-4 570 215), un dispositif pour un bus série du type précité fournit l'horloge et les données au moyen d'une pluralité d'instructions. Ceci limite la vitesse de transfert des données sur le bus.

L'invention se propose de procurer un dispositif grâce auquel un transfert en série peut être obtenu beaucoup plus rapidement, et ceci au moyen d'un matériel simple et peu coûteux.

Ceci est obtenu du fait que le fil d'horloge du bus externe est connecté au fil de plus faible poids du bus d'adresses interne.

Ainsi l'écriture sur le bus série peut se faire sans que l'unité centrale ait à lire et à exécuter des codes opératoires habituellement nécessaires pour établir l'horloge sur le bus externe, et les temps de cycle correspondants sont économisés.

Pour établir les données sur le fil de données du bus externe série, ce dernier est connecté à un port de l'unité centrale et la mémoire de codes opératoires contient, dans les positions correspondant aux adresses présentes sur le bus d'adresses pendant une opération d'écriture sur le bus série, des codes opératoires destinés à établir la valeur de la donnée sur ledit port de l'unité centrale.

Dans le cas où l'on veut lire des données à partir du bus série, le dispositif est avantageusement muni d'un registre à décalage entre le bus externe série et le fil de données du bus de données interne pour introduire des données en parallèle sur ledit bus de données interne, et l'entrée d'horloge de ce registre à décalage est reliée au fil de plus faible poids du bus d'adresses interne.

Pour l'utilisation de ce registre à décalage, il est bon que la mémoire des codes opératoires contienne des codes opératoires inactifs dans les positions correspondant aux adresses présentes sur le bus d'adresses pendant l'opération de chargement du registre à décalage.

Entre l'entrée d'horloge du registre à décalage et le fil de plus faible poids du bus d'interne d'adresses est avantageusement inséré un élément pour isoler à la demande ladite entrée d'horloge dudit fil de plus faible poids.

Le dispositif est en outre avantageusement muni d'un décodeur d'adresses dont l'entrée est reliée au bus d'adresses du système, pour mettre en service le registre à décalage lorsque des adresses determinées sont présentées sur le bus d'adresses.

La description qui va suivre, en regard du dessin annexé décrivant un exemple non limitatif fera bien comprendre comment l'invention peut être réalisée.

La figure 1 représente schématiquement l'organisation d'un système muni d'un dispositif selon l'invention.

La figure 2 représente des signaux du système lors d'une opération d'écriture ou de lecture sur le bus.

Pour simplifier la figure seuls les éléments indispensables à la compréhension de l'invention ont été représentés. Une unité centrale 1 comprend des éléments logiques habituels (non représentés) tels que des registres, une horloge et un compteur de programme, une unité arithmétique. Une mémoire 4 non inscriptible (dite ROM) contient les codes opératoires de programme: des adresses incrémentées à chaque temps de cycle lui sont présentées et à chaque fois un code y est lu, dont la séquence constitue en principe le programme exécuté par le système.

L'exemple présenté ici est un peu particulier dans la mesure où le microprocesseur 1 est ici d'un type qui utilise un bus mixte 7 portant tour à tour des données sur huit bits et des adresses (par exemple un microprocesseur de type 8031). C'est pourquoi ce bus 7 est relié à un circuit 2 dit "latch" qui a pour but de mémoriser une adresse à un certain moment, et qui délivre cette adresse sur un bus 3 qui est relié à l'entrée d'adresses de la mémoire ROM 4. Le bus mixte 7 ne porte que les huit bits de poids faible de l'adresse, et le microprocesseur utilise donc un autre bus 14 pour les huit bits de poids fort.

S'il y avait deux bus distincts pour les données et pour les adresses, le principe de réalisation de l'invention serait identique, et l'homme du métier pourrait donc facilement adapter le présent exemple : notamment, si l'on considère globalement les éléments compris dans le contour 9 en pointillés sur la figure, ils peuvent représenter un système à deux bus où le bus 7 est un bus de données à huit bits et les bus 3 et 14 forment un bus d'adresses à seize bits.

Une connexion 6 à un seul fil est reliée à un port 12 de l'unité centrale pour le transfert des données. Cette connexion 6 est le fil de données ("data") du bus externe. Le fil d'horloge ("clk") du bus externe porte la référence 15. Les deux fils 15 et 6 constituent le bus externe série et sont reliés à un organe périphérique 10.

Dans l'art antérieur, cette connexion 15 aurait été reliée à un des ports de l'unité centrale, et pour utiliser un tel agencement, on aurait recours à une séquence d'instructions machine telle que :
- mettre à 0 le port relié au fil d'horloge 15 ("clear port")
- établir la donnée sur le port relié au fil de données 6 ("set port" ou "clear port")
- mettre à 1 le port relié au fil d'horloge 15 ("set port")
- établir la donnée sur le port relié au fil de données 6 ("set port" ou "clear port")
- et ainsi de suite.

Une telle séquence dure au minimum trois ou quatre cycles de base par demi-période de l'horloge sur le fil 15, et la fréquence d'horloge est ainsi au maximum de 200 kilobits / seconde, toujours dans le cas d'utilisation d'un microprocesseur de type 8031.

Selon l'invention, le fil d'horloge 15 du bus série externe est relié au fil de plus faible poids du bus d'adresses du système. Ici un fil 5 est connecté au fil de plus faible poids du bus d'adresses 3, et le fil 15 est relié à ce fil 5 par un élément 16 dont le rôle sera expliqué plus loin, et qu'on suppose pour l'instant équivalent à un court-circuit.

A chaque exécution d'un code, l'adresse suivante n'est présentée sur le bus 3 qu'après exécution du code. En général, le temps d'exécution des divers codes opératoires présents dans la mémoire 4 est variable : de ce fait, le fil de plus faible poids du bus d'adresses pourrait porter des états 1 et 0 dont le rythme soit irrégulier. Ce problème ne se pose pas ici, car pour établir la valeur de la donnée sur le port 12, la mémoire de codes opératoires contient, dans les positions correspondant aux adresses présentes sur le bus d'adresses pendant l'opération, à chaque fois le code opératoire destiné à établir la valeur de la donnée sur le fil de données externe 6. L'application envisagée ici concerne la commande d'un appareil à partir d'un programme fixé qui prévoit l'envoi sur un organe périphérique, via le bus série, d'une valeur donnée connue à l'avance et qui est toujours la même pour les mêmes pas de programme : la séquence correspondante est donc inscrite dans la mémoire ROM.

Pendant une telle séquence, les codes opératoires sont toujours de même nature et chaque opération prend toujours le même temps. Par exemple s'il s'agit de transmettre l'octet 11100110, les codes opératoires successifs seront : "clear port", "set port", "set port", "clear port", "clear port", "set port", "set port", "set port", en supposant que l'on commence par le bit de poids le plus faible. Ainsi, lors de l'exécution d'une instruction "set port" ou "clear port", le fil d'adresse de plus faible poids prend les valeurs logiques zéro et un, c'est-à-dire qu'il constitue une horloge, sans qu'on ait à s'occuper d'établir les valeurs de signal d'horloge sur un port du microprocesseur. On peut par conséquent transmettre une donnée par cycle de base et une fréquence d'un mégabit / seconde peut être obtenue avec un microprocesseur de type 8031.

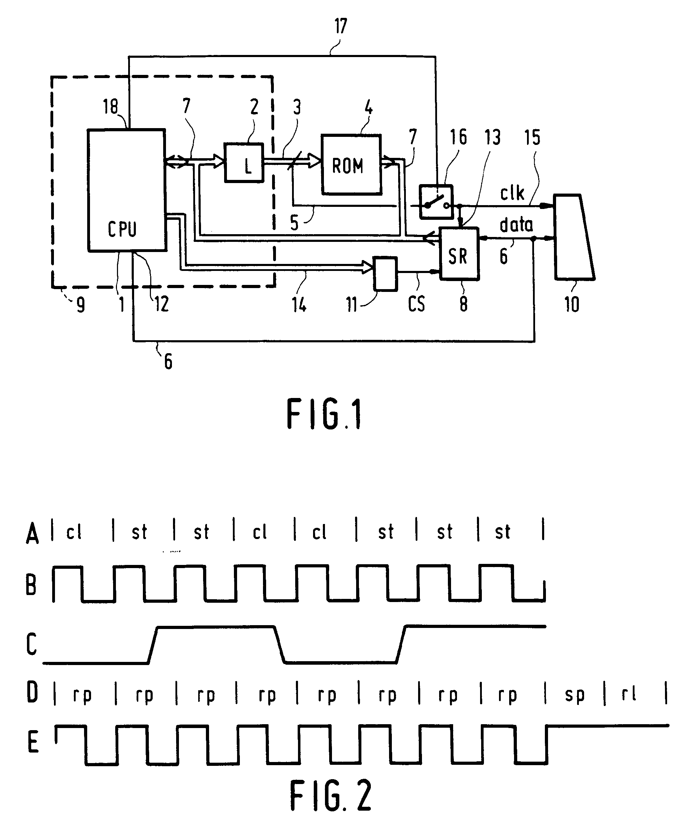

Les signaux présents lors d'une telle séquence sont illustrés sur la figure 2 : à la ligne A, des tirets verticaux marquent le début de chaque cycle de base, et l'opération réalisée dans chaque cycle est indiquée soit par "cl" pour : "clear port", soit par "st" pour : "set port" ; à la ligne B est montré le signal sur les fils 5 et 15 : à chaque cycle de base de l'unité centrale du 8031, celle-ci lit deux mots à la suite dans la mémoire 4, c'est à dire que l'adresse est incrémentée de deux pas, et le ce fait le fil de plus faible poids du bus d'adresse prend successivement les valeurs UN et ZERO ; à la ligne C est montré le signal sur le port 12 et le fil 6 résultant des opérations "cl" et "st" respectives.

Pour lire des données à partir de l'organe périphérique 10, le même procédé ne peut s'appliquer : si on remplaçait les codes opératoires successifs de mise à UN du port ("set port") ou de mise à ZERO du port ("clear port") par des codes de lecture de la valeur présente sur le fil 6 ("read port"), chacun cycle opératoire effacerait le bit acquis au cours du cycle précédent, et il faudrait prévoir une mémorisation entre deux codes de lecture successifs, ce qui ralentirait l'opération. Pour résoudre ce problème, un registre à décalage 8 est utilisé, dont l'entrée série est reliée au fil de données 6 du bus série externe et dont la sortie parallèle est reliée au bus de données 7 de l'unité centrale. Le fil d'horloge 15 du bus série est aussi relié à l'entrée d'horloge 13 du registre à décalage 8. Le registre 8 est mis en service au moyen d'une commande CS ("Chip Select") qui est fabriquée par un élément 11 décodeur d'adresse : cet élément est agencé pour reconnaître les adresses (déterminées à l'avance) qui sont présentes sur le bus d'adresses 14 pendant le chargement du registre et pour fournir alors le signal CS. La mémoire de codes opératoires 4 contient des codes opératoires inactifs, dans les positions correspondant aux susdites adresses pendant le chargement du registre 8. Ainsi ces adresses sont incrémentées régulièrement. Après le nombre de cycles de base nécessaire pour que le registre 8 soit plein, il faut arrêter de le remplir. C'est à cet effet qu'est prévu l'élément 16 placé entre l'entrée d'horloge du registre à décalage et le fil de plus faible poids du bus interne d'adresses, et commandé par l'unité centrale au moyen d'un fil de commande 17. Cet élément sert à isoler ladite entrée d'horloge dudit fil de plus faible poids. Il est symbolisé par un interrupteur sur la figure, mais il peut prendre d'autres formes, pourvu qu'il soit capable de faire que l'horloge 15, ou bien reproduit les signaux sur le fil 5, ou bien est immobilisée à partir d'une action de commande à cette fin sur le fil 17. Pour réaliser une telle commande, la mémoire ROM 4 contient après les codes inactifs mentionnés plus haut, un code qui place la valeur adéquate sur le port 18 relié au fil 17 pour arrêter l'horloge. La mémoire ROM 4 contient ensuite un code qui provoque la lecture parallèle du registre 8 par l'unité centrale 1. Cette séquence est illustrée par les lignes D et E de la figure 2 : à la ligne D, des tirets verticaux marquent le début de chaque cycle de base, et la ligne E montre l'horloge sur le fil 15. Sur la ligne D, l'opération réalisée dans chaque cycle est indiquée à chaque fois : "rp" signifie "read port" (code opératoire inactif, mais pendant lequel, du fait de la transition du signal d'horloge, un bit est lu sur le fil 6 par le registre 8), "sp" signifie "set port" (placer sur le port 18 la valeur voulue pour commander l'élément 16 de façon à arrêter l'horloge), et "rl" signifie : "read latch" (c'est à dire lire en parallèle le contenu du registre 8).

A chaque cycle de base, l'unité centrale lit deux mots à la suite dans la mémoire 4 (dans le cas du microprocesseur 8031), c'est à dire que l'adresse est incrémentée de deux pas. De ce fait, si l'on utilise un code inactif à un seul octet, la valeur de l'adresse doit revenir en arrière pour le cycle suivant, ce qui perturbe la séquence d'états 0/1 sur le fil de plus faible poids du bus d'adresses. Pour cette raison un code opératoire constitué de deux octets doit être choisi, par exemple un code "load register" (chargement de registre), "relation jump" (saut conditionnel) ou"read port" (lecture de port), qui peuvent être qualifiés d'inactifs vis-à-vis de l'unité centrale, dans le cadre de l'opération à réaliser. Dans le cas d'un microprocesseur différent où l'incrémentation d'adresse lors d'une lecture de code opératoire est d'un seul pas, un code NOP (No OPeration) peut être utilisé.

Un tel dispositif peut être employé avec bénéfice notamment quand on utilise pour les données transférées des registres de stockage dont l'adressage ne requiert pas tous les fils du bus d'adresse. Alors les adresses présentes sur le bus d'adresses pour engendrer l'horloge du fil 15 sont aussi utilisées, au moins en partie, pour adresser les registres de stockage. Le bénéfice est notamment remarquable quand les mots à envoyer sur le bus externe sont souvent les mêmes, et si l'unité centrale travaille en maître pour la transmission.

## Revendications

1. Dispositif destiné à fournir une horloge pour un bus externe d'un type série qui comprend au moins un fil d'horloge et un fil de données, dans un système à microprocesseur muni d'une unité centrale avec un agencement de bus interne d'adresses et de données connecté à l'unité centrale et à une mémoire de codes opératoires, caractérisé en ce que le fil d'horloge du bus externe est connecté au fil de plus faible poids du bus interne d'adresses.

2. Dispositif selon la revendication 1, pour la sortie de données sur le bus externe, caractérisé en ce que le fil de données du bus externe série est connecté à un port de l'unité centrale.

3. Dispositif selon la revendication 2, caractérisé en ce que la mémoire de codes opératoires contient, dans les positions correspondant aux adresses présentes sur le bus d'adresses pendant une opération d'écriture sur le bus série, des codes opératoires destinés à établir la valeur de la donnée sur le susdit port de l'unité centrale.

4. Dispositif selon la revendication 1, caractérisé en ce qu'il est muni d'un registre à décalage entre le fil de données du bus externe série et le bus de données interne pour introduire des données en parallèle sur ledit bus de données interne, et en ce que l'entrée d'horloge de ce registre à décalage est reliée au fil de plus faible poids du bus d'adresses interne.

5. Dispositif selon la revendication 4 caractérisé en ce que, entre l'entrée d'horloge du registre à décalage et le fil de plus faible poids du bus d'interne d'adresses est inséré un élément pour isoler à la demande ladite entrée d'horloge dudit fil de plus faible poids.

6. Dispositif selon la revendication 4, caractérisé en ce qu'il est muni d'un décodeur d'adresses dont l'entrée est reliée au bus d'adresses du système, et qui met en service le registre à décalage lorsque des adresses déterminées sont présentées sur le bus d'adresses.

7. Dispositif selon la revendication 4, caractérisé en ce que la mémoire des codes opératoires contient, dans les positions correspondant aux adresses présentes sur le bus d'adresses pendant l'opération de remplissage du registre à décalage, des codes opératoires inactifs vis-à-vis de l'opération réalisée sur le bus externe.

8. Système à microprocesseur muni d'un dispositif selon l'une quelconque des revendications précédentes.

## Patentansprüche

1. Einrichtung zur Lieferung eines Taktes für einen externen seriellen Bus, mit mindestens einer Taktleitung und einer Datenleitung, in einem Mikroprozessorsystem, das eine Zentraleinheit mit einer internen Adressenbus- und Datenbusanordnung hat, die mit der Zentraleinheit und einem Funktionscodespeicher verbunden ist, dadurch gekennzeichnet, daß die Taktleitung des externen Busses mit der niedrigstwertigen Leitung des internen Adressenbusses verbunden ist.

2. Einrichtung nach Anspruch 1, zur Datenausgabe auf den externen Bus, dadurch gekennzeichnet, daß die Datenleitung des externen seriellen Busses mit einem Port der Zentraleinheit verbunden ist.

3. Einrichtung nach Anspruch 2, dadurch gekennzeichnet, daß der Funktionscodespeicher auf den Plätzen, die auf dem Adressenbus während einer Schreiboperation auf dem seriellen Bus vorhandenen Adressen entsprechen, Funktionscodes enthält, die den Wert der auf dem genannten Port der Zentraleinheit vorhandenen Dateninformation festlegen sollen.

4. Einrichtung nach Anspruch 1, dadurch gekennzeichnet, daß sie mit einem Schieberegister zwischen der Datenleitung des externen seriellen Busses und dem internen Datenbus versehen ist, um Daten parallel auf den genannten internen Datenbus zu geben, und daß der Takteingang dieses Schieberegisters mit der niedrigstwertigen Leitung des internen Adressenbusses verbunden ist.

5. Einrichtung nach Anspruch 4, dadurch gekennzeichnet, daß zwischen dem Takteingang des Schieberegisters und der niedrigstwertigen Leitung des internen Adressenbusses ein Element eingefügt ist, um auf Wunsch den genannten Takteingang von der niedrigstwertigen Leitung zu trennen.

6. Einrichtung nach Anspruch 4, dadurch gekennzeichnet, daß sie mit einem Adressendecodierer versehen ist, dessen Eingang mit dem Adressenbus des Systems verbunden ist und der das Schieberegister in Betrieb setzt, wenn bestimmte Adressen auf dem Adressenbus angeboten werden.

7. Einrichtung nach Anspruch 4, dadurch gekennzeichnet, daß der Funktionscodespeicher auf den Plätzen, die auf dem Adressenbus während einer Operation zum Füllen des Schieberegisters vorhandenen Adressen entsprechen, Funktionscodes enthält, die hinsichtlich der auf dem externen Bus ausgeführten Operation inaktiv sind.

8. Mikroprozessorsystem mit einer Einrichtung nach einem der vorhergehenden Ansprüche.

## Claims

1. A device intended to supply a clock for an external bus of a serial type, which includes at least one clock wire and one data wire, in a microprocessor system provided with a central processing unit with an internal address and data bus control arrangement connected to the central unit and to an operating code memory, characterized in that the clock wire of the external bus is connected to the least-significant wire of the internal address bus.

2. A device as claimed in Claim 1 for outputting data on the external bus, characterized in that the data wire of the external serial bus is connected to a port of the central unit.

3. A device as claimed in Claim 2, characterized in that the operating code memory contains, in the locations corresponding to the addresses present on the address bus during a write operation on the serial bus, operating codes intended to establish the value of the data on the aforesaid port of the central unit.

4. A device as claimed in Claim 1, characterized in that it is provided with a shift register between the data wire of the external serial bus and the internal data bus in order to enter data in parallel on said internal data bus, and in that the clock input of this shift register is connected to the least-significant wire of the internal address bus.

5. A device as claimed in Claim 4, characterized in that between the clock input of the shift register and the least-significant wire of the internal address bus there is inserted an element to isolate, on demand, said clock input from said least-significant wire.

6. A device as claimed in Claim 4, characterized in that it is provided with an address decoder whose input is connected to the address bus of the system and which puts the shift register into operation when specified addresses are presented on the address bus.

7. A device as claimed in Claim 4, characterized in that the operating code memory contains, in the locations corresponding to the addresses present on the address bus during the operation of filling the shift register, operating codes which are inactive in relation to the operation performed on the external bus.

8. A microprocessor system provided with a device as claimed in any one of the preceding Claims.
